# EUROPEAN PATENT APPLICATION

(11) **EP 0 559 109 A1**
(43) Date of publication of application: **08.09.1993**
(21) Application number: 93103182.7
(22) Date of filing: 27.02.1993
(51) Int. Cl.: H01G 9/02, H01G 9/00, H01G 9/05

(54) **Tantalum solid electrolytic capacitor**

(30) Priority: 02.03.1992 JP 44676/92
(71) Applicant: E.I. DU PONT DE NEMOURS AND COMPANY, Wilmington Delaware 19898 (US)
(72) Inventor: Inaba, Akira, Yokohama-shi, Kanagawa-ken 227 (JP)
(74) Representative: von Kreisler, Alek, Dipl.-Chem.

(57) **Abstract**

To provide a tantalum solid electrolytic capacitor which enables to prevent a short-circuit due to diffusion of metals component contained in conductive polymer resin layer forming the cathode. A tantalum solid electrolytic capacitor comprising a fluorocarbon resin layer or a fluorocarbon resin containing layer being disposed between an anode composed of sintered tantalum having a surface of a dielectric oxide film and a cathode composition formed from a metal-containing conductive polymer resin composition, which may contain such fluorocarbon resin therein.

## Description

### FIELD OF INVENTION

The invention is directed to a TANTALUM (Ta) solid electrolytic capacitor.

### BACKGROUND OF THE INVENTION

The present invention relates to Ta solid electrolytic capacitor, more particularly this invention relates to Ta solid electrolytic capacitor which is free of short-circuit induced due to diffusion of conductive metal components contained in conductive polymer layer as a cathod into Ta metal layer as an anode.

A Ta solid electrolytic capacitor has a Ta oxide (Ta₂O₅) layer of dielectric layer on a surface of Ta sintered body as an anodic metal, which is formed using an electrochemical technique, a manganese dioxide layer (MnO₂) as an electrolyte formed thereon, a graphite (carbon) layer for obtaining sufficient electrical connection of MnO₂ layer to a cathode layer made of conductive polymer resin layer containing metal powder components and a resin binder system.

Respective lead wire is connected to the corresponding electrodes, and particularly connection of the lead wire to the cathode is made by soldering.

Generally, the Ta capacitor having the above layer structure provides good insulation and voltage resisting properties due to rectification characteristics of Ta₂O₅ layer.

Rectification characteristics of a tantalum capacitor have been explained as follows. A portion adjacent to Ta metal layer of Ta₂O₅ oxide layer is an n-type tantalum oxide layer containing excess of tantalum atoms exceeding the chemical equivalent of Ta₂O₅, this portion is considered to be a thin layer with a thickness of approximately 5 to 10 nm. The opposite portion of Ta₂O₅ layer is regarded as an intrinsic semiconductor having a chemical equivalent of Ta₂O₅ composition, which has a thickness proportional to the voltage applied when the layer is electrochemically treated, and functions as a dielectric prescribing the capacitance. However, ions adsorbed on the oxide layer surface, or substances (e.g. MnO₂) adhering to the oxide layer surface, constitute a surface state, whereby a p-type tantalum oxide layer would be induced on the surface of the oxide film. Thus, the fine structure of the anodic oxide film is considered to form a p-i-n junction. This oxide film has rectification characteristics_{,} and hence, although it has very thin thickness.

However, this Ta₂O₅ layer 2 is not a uniform layer, but has defects in places. Furthermore, since it has an n-i-p junction structure, it has an electric field even with no voltage between electrodes applied. In addition, it has been found that, since metals such as Ag in the conductive polymer paste layer 5 is apt to ionize in the presence of water, when the tantalum solid electrolytic capacitor is allowed to stand at a high temperature and humidity, Ag ionizes and passes through defects of Ta₂O₅, resulting in deposition of Ag from the Ta 1 side of the surface of Ta₂O₅, which leads to a short-circuit.

The mechanism of occurrence of the short-circuit can be explained as follows.

The tantalum oxide layer 2 is not uniform in thickness and, when impurities and others are present in the tantalum surface layer, the oxide film on that portions is thin in thickness and is imperfect and these portions become defect portions.

Such defects are randomly distributed, since at these portions diffusion of impurities may occur, defect portions have rectification characteristics like semiconductor junctions, and leakage current of the capacitor is concentrated upon these defects.

When a voltage is applied to a capacitor and gradually increased, a scintillation (discharge) occurs in one of defects when the voltage reaches at a certain value. It is observed that the scintillation normally ends in several msec. At this time, when current concentrates upon the fine spot and it is locally heated, MnO₂ adjacent to this spot is converted to a higher oxide MnO₃, this higher oxide is considerably higher in electrical resistance than MnO₂, and this contributes to limit current at the spot portion. Thus, the defect is healed by this current blocking effect.

When the local heat evolution is appropriate, current is blocked by the higher oxide of MnO₂, however, when the energy is high, a thermal degradation of Ta₂O₅ is caused by the current and this may bring about a short-circuit.

### SUMMARY OF THE INVENTION

It is therefore an object of the invention to provide improved tantalum solid electrolytic capacitor, which is able to prevent a short circuit due to migration of metal components contained in the conductive polymer composition composing the cathode between dielectrics at a high temperature and humidity, and deposition of the metal of the conductive polymer composition from Ta body and Ta₂O₅ layer composing the anode and the dielectric layer at the portion of the Ta₂O₅ layer adjacent to Ta metal layer.

This improved tantalum solid electrolytic capacitor comprises an anode composed of a tantalum sinter formed on the surface thereof with a dielectric oxide film, a cathode composed of a conductive polymer composition, and a fluorocarbon resin layer or a layer containing essentially divided fluorocarbon resins disposed between the anode and the cathode.

Another object of the invention is to provide a tantalum solid electrolytic capacitor which comprises an anode made of a tantalum sinter formed on the surface thereof with a dielectric oxide film, and a cathode made of a conductive polymer composition, wherein the composition contains a fluorocarbonic resin.

More specifically, the fluorocarbon resin can be used in the anode or the cathode in the following manner.
(1) The fluorocarbon resin is coated on the Ta anode layer side, that is, on the surface of Ta₂O₅ layer.
(2) The fluorocarbon resin is added to the graphite (carbon) paste, or alternatively coated on the surface of the graphite layer.
(3) The fluorocarbon resin is added to the conductive polymer resin forming the cathode, or alternatively coated on the metal powder in the conductive polymer resin.
(4) Any combination of (1) to (3).

The fluorocarbon resin to be used in the present invention is polytetrafluoroethylene (PTFE), tetrafluoroethylene - perfluoropropylene copolymer (PFA), tetrafluoroethylene - hexafluoropropylene copolymer (FEP), tetrafluoroethylene - ethylene copolymer (ETFE), tetrafluoroethylene - hexafluoropropylene - perfluoro-alkylvinylether copolymer (EPE), polychlorotrifluoroethylene (PCTEE), chlorotrifluoroethylene - ethylene copolymer (ECTFE), polyvinylidenefluoride (PVdF), polyvinylfluoride (PVF), or flexible fluororesin (fluororubber). These are not specifically limited, however, any type known in the art can be used in the Ta capacitor of the present invention.

When the fluorocarbon resin is used according to the above manner (3), that resins such as TFE, CTFE, PVdF, or PVF, which can be dissolved or dispersed in water or a solvent being a dispersant for the conductive polymer resin layer, are used.

The manner for use of the fluorocarbon resin is not specifically limited, but coating, impregnation, deposition, lamination, or the like can be appropriately used.

Other composition such as the conductive polymer resin layer can be formed using conventional methods known in the art.

### BRIEF DESCRIPTION OF THE DRAWINGS

Fig. 1 is a schematic cross sectional view showing prior art tantalum solid electrolytic capacitor.

Fig. 2 is a schematic cross sectional view showing an embodiment of the tantalum state electrolytic capacitor according to the present invention.

Fig. 3 is a schematic cross sectional view showing another embodiment of the tantalum solid electrolytic capacitor according to the present invention.

Fig. 4 is a circuit diagram used for testing characteristics of the tantalum solid electrolytic capacitor according to the present invention.

Fig. 5 is a graph showing characteristics of the tantalum solid electrolytic capacitor according to the present invention.

### DETAILED DESCRIPTION OF THE INVENTIONS

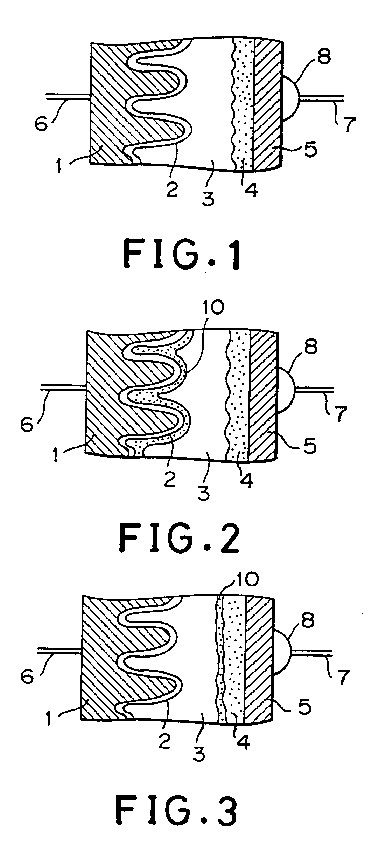

Fig. 2 shows an example in which a fluorocarbon resin layer 10 is coated on the surface of the Ta sinter 1 forming the anode member according to the above manner (1), more exactly, an example on the surface of Ta₂O₅. Other structures are same as those of a prior art example shown in Fig. 1. Therefore, same components are indicated by the same numerals, and description thereof is omitted.

Fig. 3 shows an example in which the fluororesin layer 10 is coated on the surface of a carbon layer 4 provided on the cathode side according to the above manner (2).

Other structures are similar to those of the prior art shown in Fig. 1. Therefore, same components are indicated by the same numerals, and description thereof is omitted.

Although not shown, the fluororesin may be dispersed in the carbon layer 4 (refer to Fig. 3) . In this case, the amount of the fluororesin to be added can be experimentally determined taking the objective values of capacitor characteristics into consideration.

Although not shown, the fluororesin may be dispersed in the electroconductive resin 5 (refer to Fig. 3) composing the cathode member according to the above manner (3). The amount to be added in this case can also be experimentally determined taking the objective values of capacitor characteristics into consideration.

For example, when silver (Ag) is used as a metal dispersed in the electroconductive resin, since the electroconductive resin layer is required to have a specific resistance of less than 10⁻² ohm.cm, it is preferable that where the amount of silver is 100% by weight the amount of the resin (such as epoxy resin, acrylic resin, phenoxy resin, or the like) is 35% by weight or less. However, when the resin content is less than 10% by weight, the adhesion of the resin to the substrate tends to be insufficient, which is not preferable.

Therefore, the amount of the fluororesin added to the electroconductive resin layer is 25% by weight at a maximum, preferably 2 to 6% by weight in view of a specific resistance of less than 10⁻³ ohm.cm and the sufficient adhesion to the substrate.

A production example of the tantalum solid electrolytic capacitor according to the present invention will now be described.

First, fine tantalum metal powder highly purified to a purity of 99.9% or more is used as a raw material, an organic binder, such as camphor, dissolved into an organic solvent is mixed with the powder and a lead wire is embedded therein, and the admixture is press molded to obtain a porous molding. Then, the binder is removed, the molding is sintered at a high temperature of 1,500 to 2,000°C and in a high vacuum of 10⁻⁵ to 10⁻⁶ Torr to achieve the bonding between the individual particles and the embedded lead wire, thereby obtaining a porous sinter.

By sintering Ta body a dielectric oxide film is formed on the surface of particles by electrochemical anodic oxidation. Anodic oxidation is achieved by applying a voltage to the sintered Ta body as an anode in an electrolyte such as phosphoric acid. Since the oxide film formed has a thickness proportional to the voltage applied, and shows a beautiful bright interference color depending on the film thickness, the condition of the formed film can be confirmed by visual observation.

The oxide film thus formed is amorphous Ta₂O₅ and exhibits a very high insulation property. Manganese dioxide as an electrolyte is deposited on the surface by pyrolysis reaction of manganese nitrate solution.

In order to coat the film surface in the porous material sufficiently with manganese dioxide, the procedures of manganese nitrite impregnation and pyrolysis are repeated several times. After that, in order to reduce the contact resistance, a carbon layer is formed, and an epoxy silver paste, comprising 100 parts by weight of silver, 20 parts by weight of epoxy resin, and 3 parts by weight of Teflon G (Du Pont, U.S.A.), is coated thereon to form a cathode layer.

Then, outer terminals are individually connected to the projected lead-in wire and part of the cathode metal layer, and an external resin is coated. The capacitor is further subjected to aging and finishing steps to obtain a complete tantalum solid electrolytic capacitor.

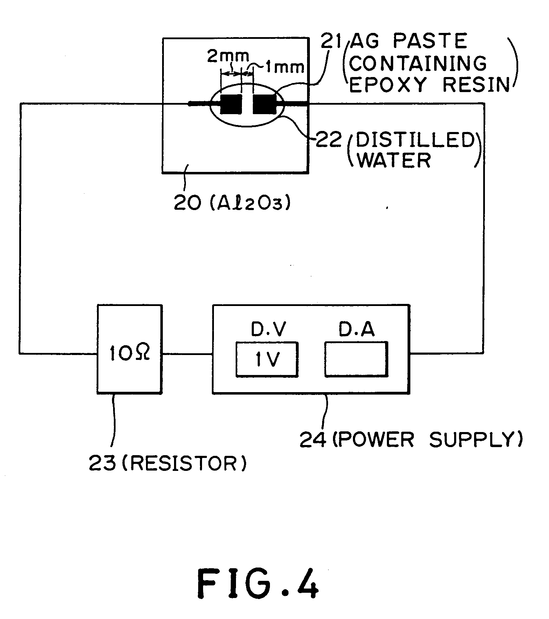

An apparatus as shown in Fig. 4 was fabricated and experiments were performed to measure the extent of the Ag migration in the cathode layer.

Specifically, the foregoing epoxy silver paste was pattern printed (print pattern: 2 mm square/1 mm gap) on an Al₂O₃ plate 20 to form an epoxy silver pattern 22, and cured at 200°C for 60 minutes. Then, 0.1 cc of distilled water 22 was placed on the pattern 21 to cover it, and while a voltage of 1.0V was applied for 600 seconds using a circuit shown in Fig. 4 the current was measured. In this case, the extent of the migration of silver was determined from the value of the current relative to the load time. In the Figure, numeral 23 indicates a resistor, and numeral 24 indicates a power supply.

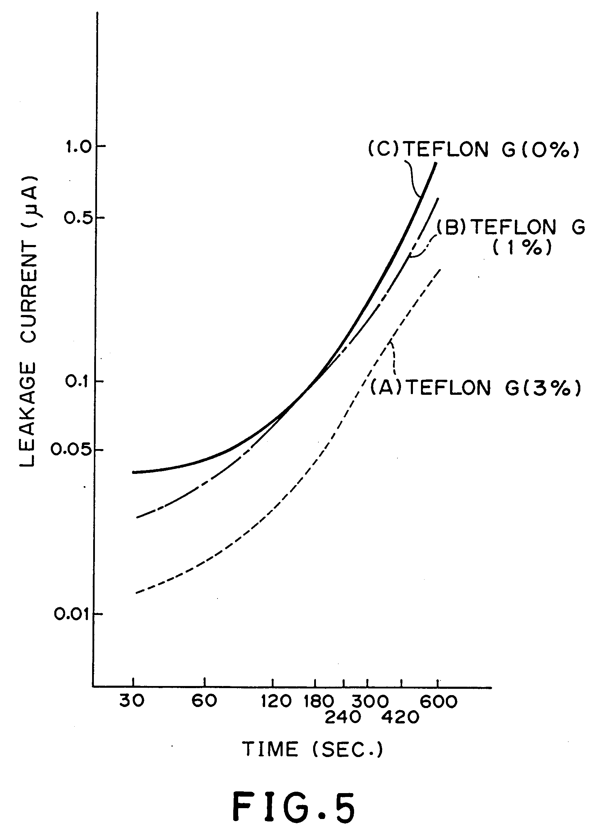

The test result is shown as a curve (A) in Fig. 5.

For comparison, the migration of silver was measured under the same condition as foregoing experiment, except that 1 part by weight (to 100 parts by weight of silver) of Teflon G was added to the epoxy silver paste, or no Teflon was used. The results are shown as curves (B) and (C) respectively in Fig. 5.

It is confirmed from the test results that occurrence of leakage current can be remarkably suppressed by adding 2 to 6% by weight of the fluororesin to 100 % by weight of Ag.

## Claims

1. A tantalum solid electrolytic capacitor comprising: an anode member composed of a tantalum sinter formed on the surface thereof with a dielectric oxide film; a cathode member composed of an electroconductive resin; and a fluororesin layer or a fluororesin-containing resin layer disposed between said anode member and said cathode member.

2. The tantalum solid electrolytic capacitor of Claim 1, wherein said electroconductive resin contains a fluororesin.

3. A tantalum solid electrolytic capacitor comprising: an anode member composed of a tantalum sinter formed on the surface thereof with a dielectric oxide film; and a cathode member composed of an electroconductive resin, wherein said electroconductive resin contains a fluororesin.
